# EUROPÄISCHE PATENTSCHRIFT

(11) **EP 3 959 074 B1**
(45) Veröffentlichungstag und Bekanntmachung des Hinweises auf die Patenterteilung: **09.12.2026**
(21) Anmeldenummer: 20725621.5
(22) Anmeldetag: 23.04.2020
(51) Int. Cl.: B32B 9/02, B32B 3/18, B32B 5/16, B32B 7/03

(54) **WERKSTOFFPLATTE**
MATERIAL PLATE
PANNEAU DE MATÉRIAU

(30) Priorität: 25.04.2019 CH 5532019
(43) Veröffentlichungstag der Anmeldung: 02.03.2022
(73) Patentinhaber: Bard, Markus, 4153 Reinach (CH)
(72) Erfinder: Bard, Markus, 4153 Reinach (CH)
(74) Vertreter: Rentsch Partner AG
(86) Internationale Anmeldenummer: PCT/EP2020/061397
(87) Internationale Veröffentlichungsnummer: WO 2020/216871

(56) Entgegenhaltungen:
- WO-A1-2013/162405
- WO-A1-2013/162406
- WO-A1-2015/067898
- GB-A- 2 234 935
- GB-A- 2 292 336
- US-A1- 2007 125 446

## Beschreibung

Die Erfindung betrifft eine Werkstoffplatte mit mehreren Mittelschichten aus unterschiedlichem Bambusmaterial und zwei Deckschichten, sowie ein Verfahren zu ihrer Herstellung.

Mehrschichtige Werkstoffplatten mit Mittelschichten aus Bambus zum Reduzieren des Gewichts sind bekannt. Die groben Mittelschichten aus langfaserige Bambussträngen haben eine grosse Zahl von Hohlräumen, die zur Erzielung eines geringen Gewichts der Platte erwünscht sind und im Herstellungsprozess nicht mit Leim oder Leim-Faser-Gemisch gefüllt werden sollten.

Gattungsgemäße Werkstoffplatten werden etwa offenbart in der WO 2015/067898 A1, in der US 2007/125446 A1, in der GB 2292336 A und in der GB 2234935 A.

Der Erfindung liegt die Aufgabe zugrunde, eine Werkstoffplatte und ein Verfahren zu ihrer Herstellung zu kreieren, bei denen die Hohlräume der langfaserigen Mittelschicht weitgehend leer sind.

Erfindungsgemäss wird dies durch die kennzeichnenden Merkmale des Anspruchs 1 und des Verfahrensanspruchs erreicht.

Gemäss der Erfindung bestehen die Mittelschicht aus kreuzweise gelegten langfaserigen Bambussträngen und die beidseitig anschliessenden Schichten aus verleimten feinen Bambusspreisseln oder - schnitzeln. Dadurch wird erreicht, dass die Oberflächen, auf denen dünne Deckschichten aufgebracht werden, besonders glatt sind.

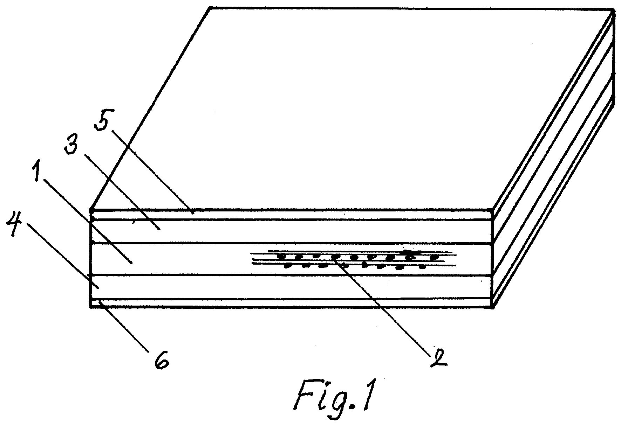

Im Folgenden wird die Erfindung anhand der beiliegenden Zeichnung näher beschrieben. Es zeigt
- Fig. 1: eine schematische perspektivische Darstellung einer Werkstoffplatte mit einer Mittelschicht ...

Die in Fig. 1 gezeigte Werkstoffplatte besteht aus fünf Schichten, und zwar aus einer Mittelschicht 1 aus kreuzweise angeordneten Bambussträngen 2 und zwei beidseitig anschliessenden Feinschichten 3, 4 aus verleimten Bambusspreisseln oder -schnitzeln. Mit diesen beiden Feinschichten ist eine besonders fein strukturierte bzw. glatte Oberfläche erzielbar, auf der Deckschichten 5, 6 aus unterschiedlichen Materialien, wie z.B. Lackierung, Beschichtung mit Harzen oder harzgetränkten Papieren, Linol, Kunstharz oder Aluminium aufgebracht werden können.

Besonders wichtig ist dabei, dass das Material der Feinschichten nicht in die Hohlräume gelangt, weil dadurch die Platte schwerer werden würde. Die groben Späne werden abgeglättet und dann kommt die Feinschicht darauf.

Mit speziellen Leimgemischen und Zusatzstoffen wie z. B. Gips oder anderen nicht brennbaren Materialien, können Brandschutzplatten und Brandschutzelemente hergestellt werden.

Mit anderen speziellen Leimgemischen können wasserfeste Platten für den Feucht- oder Nassbereich, für Böden im Badzimmer oder im Baubereich hergestellt werden.

Mit einem anderen speziellen Leim, z.B. PVA-Leim, kann eine formaldehydfreie Ökoplatte hergestellt werden. Mit Zusatzstoffen, wie Styropor, Balsaholz oder Pappelspänen, ist eine Platte herstellbar, die sehr leicht und stabil ist.

Mit sehr hoher Verdichtung für die absolut stabilste Version mit dichterer Schüttung und höherem Pressdruck entstehen Spezialplatten mit höchster Stabilität.

Die Herstellung der Platten erfolgt in einer einstufigen Verpressung aller Schichten. Die Schichtanordnung wird auf einem Band einer Presse zugeführt, in der die Schichten miteinander verpresst werden.

## Patentansprüche

1. Werkstoffplatte mit
a. einer Mittelschicht (1) aus kreuzweise angeordneten Bambussträngen mit leeren Hohlräumen zwischen den Bambussträngen,
b. beidseitig anschliessenden Feinschichten (3, 4) aus verleimten Bambusschnitzeln oder -spreisseln und
c. beidseitig anschliessenden Deckschichten (5, 6).

2. Verfahren zur Herstellung der Werkstoffplatte nach Anspruch 1, **dadurch gekennzeichnet, dass** die Schichtanordnung auf einem Band einer Presse zugeführt wird, in der die Schichten miteinander verpresst werden.

## Claims

1. A composite board comprising
a. a middle layer (1) made from bamboo strands arranged crosswise, with empty hollow spaces between the bamboo strands,
b. fine layers (3, 4) made from glued bamboo chips or shavings, adjoining on both sides; and
c. cover layers (5, 6) adjoining on both sides.

2. A method for manufacturing the composite board according to claim 1, **characterized in that** the layer arrangement is fed on a belt to a press in which the layers are pressed together.

## Revendications

1. Panneau composite comprenant
a. une couche centrale (1) constituée de brins de bambou arrangées en croisement, avec des cavités vides entre les brins de bambou,
b. couches fines (3, 4) adjacentes de chaque côté, constituées de copeaux ou de éclats de bambou collés, et
c. couches de revêtement (5, 6) adjacentes de chaque côté.

2. Procédé de fabrication du panneau selon la revendication 1, **caractérisé en ce que** l'ensemble des couches est amené à une presse sur une bande de ladite presse, dans laquelle les couches sont pressées les unes contre les autres.
